# EUROPÄISCHE PATENTANMELDUNG

(11) **EP 2 237 403 A1**
(43) Veröffentlichungstag der Anmeldung: **06.10.2010**
(21) Anmeldenummer: 09004544.4
(22) Anmeldetag: 30.03.2009
(51) Int. Cl.: H02M 7/797, H02M 1/44, H02M 7/5388

(54) **Wechselrichter mit zwei asymmetrischen Brückenschaltungen und einem Freilaufpfad zur Entkopplung von Gleich- und Wechselspannungsseite**

(71) Anmelder: SMA Solar Technology AG, 34266 Niestetal (DE)
(72) Erfinder: Müller, Burkard, 34123 Kassel (DE)
(74) Vertreter: Walther, Walther & Hinz GbR

(57) **Zusammenfassung**

Die Erfindung betrifft einen bidirektionalen Wechselrichter mit zwei Gleichspannungsanschlüssen (DC+, DC-) und zwei Wechselspannungsausgängen (U, V), umfassend zwei Vollbrückenschaltungen (A, B) und mehrere Induktivitäten (L1, L2, L1', L2'), wobei die erste Brückenschaltung (A) mit den beiden Gleichspannungsanschlüssen (DC+, DC-) und zwei Wechselspannungsanschlüssen (AC1, AC2) verbunden ist und die zweite Brückenschaltung (B) mit den beiden Gleichspannungsanschlüssen (DC+, DC-) und zwei anderen Wechselspannungsanschlüssen (AC1', AC2') verbunden ist, sowie die Wechselspannungsanschlüsse (AC1, AC2, AC1', AC2') beider Brückenschaltungen (A, B) über mehrere Brückeninduktivitäten (L1, L2, L1', L2', LU', LV') so miteinander verbunden sind, dass sie nur einen Stromfluss in eine Stromrichtung zulassen und wenigstens einen entkoppelbaren Freilaufpfad schaffen.

## Beschreibung

Die Erfindung betrifft einen bidirektionalen Wechselrichter nach Anspruch 1, insbesondere zur Verwendung in einer Photovoltaikanlage.

Bekannt sind bidirektionale Wechselrichter. Für bestimmte Aufgaben müssen diese Wechselrichter in der Lage sein, Energie sowohl von der Gleichspannungs- auf die Wechselspannungsseite als auch von der Wechselspannungs- auf die Gleichspannungsseite zu übertragen. Ein Beispiel für diese Anforderung ist die Bereitstellung von Blindleistung auf der Wechselspannungsseite des Wechselrichters. In diesem Fall muss der Wechselrichter nur während eines Teils der Netzperiode Energie von der Gleichspannungs- auf die Wechselspannungsseite übertragen, während sich in der restlichen Zeit der Energiefluss umkehrt.

Für Wechselrichter, die als Halbleiterschalter sogenannte IGBT Bauteile benutzen, stellt diese Anforderung im Allgemeinen kein Problem dar, wenn jedem IGBT eine Diode antiparallel geschaltet wird. Dreht sich der Energiefluss um, wird die Diode statt des IGBT bestromt. Sollen andere Halbleiterschalter wie z. B. MOSFET mit internen, parasitären Dioden, eingesetzt werden, ergeben sich aber häufig Probleme mit den internen, parasitären Dioden dieser Bauteile. Diese Dioden sind üblicherweise für den schaltenden Betrieb nur sehr schlecht geeignet, da sie hohe Sperrverzugsladungen und einen harten Stromabriss beim Abkommutieren aufweisen. Es lässt sich jedoch nicht vermeiden, dass diese Dioden bei Umkehr des Energieflusses den Strom genauso übernehmen wie die gezielt antiparallel zu den IGBTs eingebauten Dioden. Die internen, parasitären Dioden verursachen dann durch ihre Sperrverzugsladungen hohe Schaltverluste und durch den harten Stromabriss ein schlechtes elektromagnetisches Verhalten. Es müssen deshalb spezielle Schaltungsanordnungen benutzt werden, wenn mit MOSFET oder vergleichbaren Halbleitern bidirektionale Wechselrichter aufgebaut werden sollen.

Eine solche Schaltung ist aus der US 6 847 196 B2 bekannt. Hier wird ein DC/AC-Wandler mit vier Schaltern und mit durch zusätzliche, sättigbare Drosseln getrennte Strompfade eingesetzt. Es sind vier zusätzliche Freilaufdioden vorhanden. Diese Anordnung verhindert einen Stromfluss durch die intern in den Schaltern vorhandenen antiparallelen Dioden. Von Nachteil bei dieser Schaltung ist jedoch, dass in keinem Schaltzustand eine Entkopplung zwischen der DC-Quelle und der Schaltungsanordnung stattfindet. Wie bei jeder einfachen H-Brücke tritt deshalb bei einem Schaltvorgang in nur einer Brückenhälfte ein hochfrequenter Spannungssprung zwischen der Ein- und Ausgangsseite auf. Ist die Ausgangsseite des Wechselrichters an das öffentliche Netz angeschlossen und damit geerdet, springt das Potenzial der Eingangsseite hochfrequent gegenüber dem Erdpotenzial. Dies ist z. B. für Photovoltaikgeneratoren als Quelle sehr nachteilig, da diese aufgrund ihrer Bauform eine hohe Kapazität gegen das Gehäuse besitzen, so dass unerwünschte kapazitive Ableitströme bzw. gefährliche Berührungsspannungen entstehen können.

Hochfrequente Potenzialsprünge lassen sich bei dieser Schaltung nur vermeiden, wenn beide Brückenhälften gleichzeitig geschaltet werden, wodurch sich jedoch der Wirkungsgrad der Schaltung verringert. Alternativ ließe sich der Schaltung netzseitig ein Transformator nachschalten. Auch hierbei vermindert sich jedoch der Gesamtwirkungsgrad. Ein Einsatz dieser Schaltung im Photovoltaikbereich ist daher ungünstig.

Die deutsche Patentschrift DE 10 2004 030 912 B3 beschreibt einen Photovoltaik-Wechselrichter, der aus vier Brückenschaltern und einem zusätzlichen Entkopplungsschalter außerhalb der Brücke bzw. im Gleichspannungskreis besteht. Diese Schaltung löst das Problem der hochfrequenten Ableitströme mit gutem Wirkungsgrad. Während der Freilaufphasen wird ein Freilaufstromkreis durch den Entkopplungsschalter vom Photovoltaik-Generator getrennt. Der Freilaufstrom fließt in einem vom Photovoltaik-Generator entkoppelten Stromkreis. Dadurch wird die Umladung der parasitären Kapazität zwischen Generator und Erde vermieden, so dass hochfrequente Ableitströme weitgehend nicht auftreten.

Der Nachteil dieser Schaltung liegt darin, dass bei bidirektionalem Betrieb für die Schalter und die Dioden keine optimalen Bauteile eingesetzt werden können. Aufgrund der unterschiedlichen Energieflussrichtungen müssen für alle Halbleiterschalter antiparallele Dioden vorgesehen werden. Werden MOSFET oder vergleichbare Transistoren als Schalter verwendet, übernehmen deren interne, parasitäre Dioden den Strom mit den bereits beschriebenen negativen Auswirkungen.

Eine andere Lösung für das Problem der hochfrequenten Ableitströme beschreibt die EP 1 369 985 A2. Eine übliche H-Brücke mit vier Brückenschaltern wird hier durch zwei schaltbare Verbindungspfade zwischen den Brückenausgängen ergänzt, so dass ebenfalls ein von der Gleichspannungsseite entkoppelbarer, potenzialfreier Freilauf geschaffen wird. Auch hier müssen jedoch zumindest für die Brückenhalbleiter antiparallele Dioden vorgesehen werden, so dass spezielle Halbleiter wie MOSFET nicht ohne Probleme eingesetzt werden können.

Der Erfindung liegt die Aufgabe zugrunde, eine transformatorlose Wechselrichterschaltung, insbesondere für Photovoltaikanlagen, anzugeben, die einerseits hochfrequente Spannungssprünge zwischen Gleich- und Wechselspannungsseite weitgehend vermeidet, dabei einen hohen Wirkungsgrad besitzt und andererseits bidirektional betrieben werden kann, so dass sie blindleistungsfähig ist.

Diese Aufgabe wird durch einen Wechselrichter mit den Merkmalen des Anspruches 1 in Verbindung mit seinen Oberbegriffsmerkmalen gelöst.

Der Erfindung liegt die Erkenntnis zugrunde, dass bei bestimmten Vollbrückentopologien entweder kein potenzialfreier Freilauf schaltbar ist, wodurch der Wirkungsgrad der Schaltung gering bleibt, oder aber im Blindleistungsbetrieb ein Strom über die antiparallelen Dioden aller Schalter und somit auch über interne antiparallele Bodydioden fließt. Im Blindleistungsbetrieb sind die Schaltparameter der Bodydioden nicht optimal für diese Anwendung. Die Bodydioden verursachen beim Kommutierungsvorgang eine hohe Sperrverzugsladung (Qrr), was zu einem schlechteren Wirkungsgrad der Gesamtanordnung führt, sowie einen harten Stromabriss, der das EMV-Verhalten der Schaltung verschlechtert.

Durch die erfindungsgemäße Wechselrichterschaltung ist es möglich, den Wechselrichter bidirektional zu betreiben, dabei hochfrequente Spannungssprünge zwischen Gleich- und Wechselspannungsseite zu vermeiden und trotzdem Stromflüsse in internen antiparallelen Bodydioden von Halbleiterschaltern zu verhindern, falls solche eingesetzt werden.

Die Erfindung beruht auf dem Gedanken, eine Schaltungsanordnung mit potenzialfreiem Freilauf zu schaffen, die einen Stromfluss zur Rückspeisung zulässt, aber diesen von den internen Bodydioden fernhält. Erfindungsgemäß werden dazu zwei getrennte Vollbrücken benutzt, die durch ihren Aufbau wechselspannungsseitig jeweils nur eine Stromrichtung zulassen und die jeweils einen schaltbaren und von der Gleichspannungsseite entkoppelbaren Freilaufpfad besitzen, der ebenfalls nur diese Stromrichtung zulässt. Die Gleichspannungsseiten dieser Vollbrücken werden verbunden und bilden die Gleichspannungsseite des Wechselrichters, während jeder der Wechselspannungsarischlüsse über jeweils eine erfindungsgemäße Brückeninduktivität so mit einem Wechselspannungsanschluss des Wechselrichters verbunden ist, dass jede der beiden für den Betrieb des Wechselrichters wechselspannungsseitig benötigten Stromrichtungen von einer der beiden Vollbrücken getrieben werden kann.

Jede der Vollbrückenschaltungen treibt wechselspannungsseitig einen Strom, der über den Leckstrom der Halbleiter hinausgeht, nur in eine solche Richtung, dass dieser aus den ersten Wechselspannungsanschlüssen hinaus fließt und durch die zweiten Wechselspannungsanschlüsse wieder hinein fließt. Jede der Vollbrückenschaltungen treibt einen Strom von mehreren Milliampere in diese Richtung. Der Leckstrom soll dabei einige Milliampere nicht übersteigen. Durch den entkoppelten Freilaufpfad wird der Wechselrichter blindleistungsfähig.

Die Halbleiterschalter werden durch das Einfügen der erfindungsgemäßen Induktivitäten nach Stromrichtungen getrennt, so dass sich der Strom in einem einzelnen Halbleiter auch dann nicht umkehren kann, wenn dieser eine interne, parasitäre Diode besitzt. Dieses Prinzip wird auch durch die schaltbaren Freilaufpfade nicht verletzt, da diese erfindungsgemäß nur eine Stromrichtung zulassen. Trotzdem bieten die schaltbaren Freilaufpfade die aus der DE 10 2004 912 B3 und der EP 1 369 985 A2 bekannten Vorteile, indem sie einen hohen Wirkungsgrad ermöglichen, ohne dass hochfrequente Spannungssprünge zwischen Gleich- und Wechselspannungsseite auftreten.

Zwischen dem Verbindungspunkt zweier Brückendrosseln und dem Wechselspannungsausgang können weitere Filterelemente vorhanden sein, beispielsweise mindestens eine Filterdrossel, die einen größeren, insbesondere einen mindestens fünfmal größeren Induktivitätswert als die Brückendrossel aufweist. Dadurch kann die eigentliche Filterfunktion von der Filterdrossel übernommen werden, so dass nur ein großes magnetisches Bauteil pro Pol der Netzspannung benötigt wird.

Jede Brückeninduktivität kann durch ein zusätzliches Drossel-Bauelement gebildet sein. Besonders vorteilhaft ist es aber, wenn die beiden Filterdrosseln jeweils als Doppeldrossel ausgeführt sind, wobei die Streuinduktivitäten die vier Brückendrosseln bilden. So lässt sich eine Trennung der Strompfade mit nur zwei Bauelementen erreichen.

Weitere vorteilhafte Ausgestaltungen der Erfindung sind in den Unteransprüchen gekennzeichnet.

Die Erfindung wird beispielhaft anhand der Zeichnungen beschrieben. Es zeigen:
- Fig. 1: einen erfindungsgemäßen bidirektionalen Wechselrichter,
- Fig. 2a-d: Ausführungsbeispiele für Vollbrückenschaltungen des Wechselrichters,
- Fig. 3: einen bidirektionalen Wechselrichter mit zusätzlichen Filterdrosseln und
- Fig. 4: einen Wechselrichter mit Doppeldrosseln als Filterinduktivi- täten.

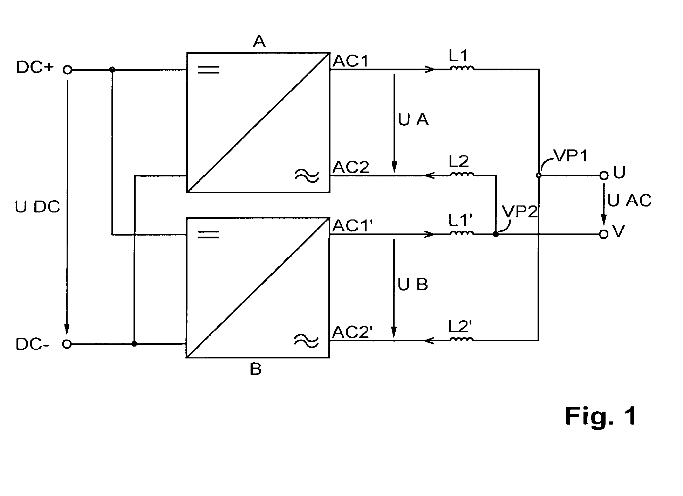

Fig. 1 zeigt das Grundprinzip des erfindungsgemäßen bidirektionalen Wechselrichters, insbesondere eines Photovoltaik-Wechselrichters. Es werden zwei Vollbrückenschaltungen A, B mit gleichspannungsseitigen Anschlüssen DC+ und DC- sowie wechselspannungsseitigen Anschlüssen bzw. Wechselspannungsanschlüssen AC1, AC2 bzw. AC1', AC2' eingesetzt.

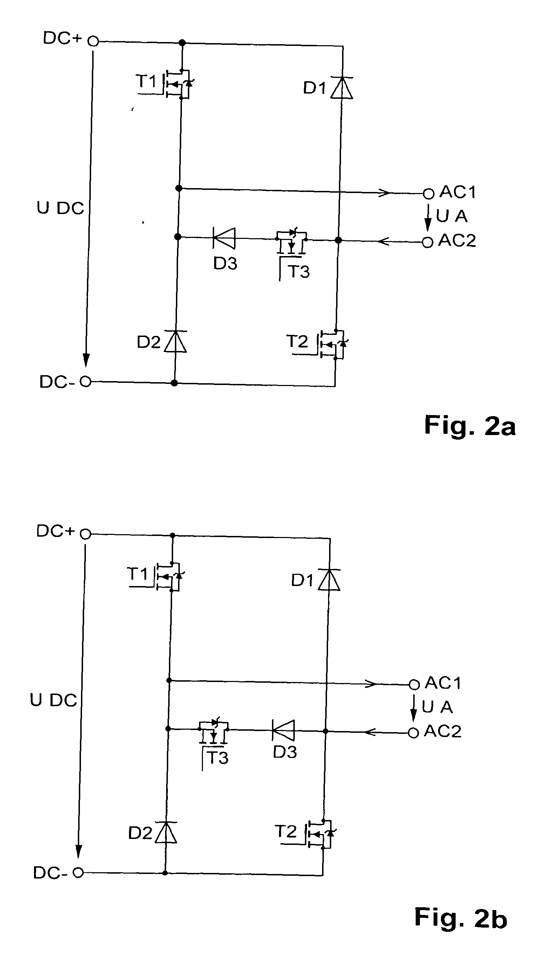

Die Figuren 2a - 2b veranschaulichen mögliche Vollbrückenschaltungen A, B.

Der Betrag der Wechselspannung U AC ist -wie für Vollbrücken üblichstets kleiner als der der Gleichspannung U DC. Jede der beiden Vollbrückenschaltungen A, B treibt einen Strom aus dem Anschluss AC1 bzw. AC1' und in den Anschluss AC2 bzw. AC2'.

Solange der Strom in diese Richtung fließt, kann die Brückenschaltung A die Ausgangsspannungen U A = U DC, U A = -U DC und U A=0 liefern, wobei die Nullspannung potenzialfrei ist. Die Brückenschaltung B ist äquivalent zur Brückenschaltung A aufgebaut und hat daher die gleichen Eigenschaften bezüglich der Spannung U B. Wechselspannungsseitig sind die beiden Brückenschaltungen A, B derart über Drosseln an den Wechselspannungsausgang U, V der Gesamtschaltung angeschlossen, dass jede der beiden Brückenschaltungen A, B einen Strom in beide erforderliche Stromrichtungen treiben kann. Werden die beiden Brückenschaltungen A, B gleichzeitig geschaltet, so kann die Ausgangsspannung U AC unabhängig von der aktuellen Stromrichtung eingestellt werden.

Der bidirektionale Wechselrichter umfasst, wie Fig. 1 zeigt, mehrere Induktivitäten L1, L2, L1', L2'. Die erste Brückenschaltung A ist mit den beiden Gleichspannungsanschlüssen DC+, DC- und zwei Wechselspannungsanschlüssen AC1, AC2 verbunden. Die zweite Brückenschaltung B ist mit den beiden Gleichspannungsanschlüssen DC+, DC- und zwei anderen Wechselspannungsanschlüssen AC1', AC2' verbunden. Die Wechselspannungsanschlüsse AC1, AC2, AC1', AC2' beider Brückenschaltungen A, B sind über mehrere Brückeninduktivitäten L1, L2, L1', L2', LU', LV' so miteinander verbunden, dass sie nur einen Stromfluss in eine Stromrichtung zulassen und wenigstens einen entkoppelbaren Freilaufpfad schaffen.

Eine Vollbrückenschaltung besteht immer aus vier Halbleitern. Gemäß dem Beispiel in Fig. 2a umfasst jede Vollbrückenschaltung A, B zwei Schalter T1 und T2 (Halbleiter), die schaltungsmäßig diagonal angeordnet sind, und zwei Dioden D1 und D2, die ebenfalls diagonal angeordnet sind. Die Schalter T1 und T2 sind vorzugsweise als Leistungshalbleiter ausgeführt.

In Fig. 2a ist ein dritter Schalter T3 in Reihe mit einer dritten Diode D3 geschaltet, und zwar zwischen dem Wechselspannungsausgang AC2 und dem Verknüpfungspunkt des Schalters T1 und der Diode D2. Die Schaltung gemäß Fig. 2b stellt eine Variante zu der Fig. 2a dar, wobei beide Schaltungen zum gleichen Ergebnis führen.

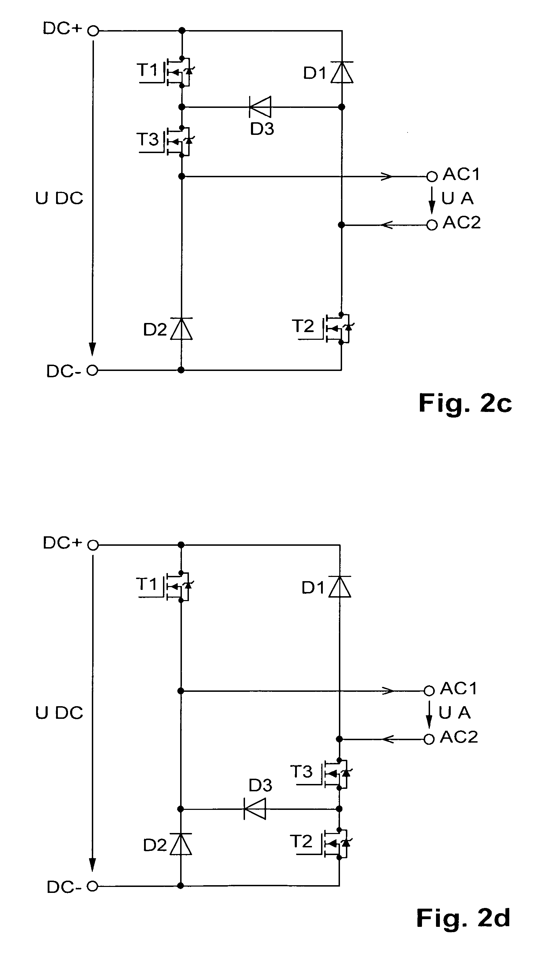

Bei der Schaltung gemäß Fig. 2c liegt der dritte Schalter T3 in Reihe mit dem Schalter T1 und der Diode D2. Die Diode D3 liegt zwischen dem Verknüpfurigspunkt der Schalter T1, T3 einerseits und dem Verknüpfungspunkt des Schalters T2 und der Diode D1 andererseits. Der Anschluss AC1 liegt zwischen dem Schalter T3 und der Diode D2. Auch hier gilt, wie auch schon in Bezug auf Fig. 2b ausgeführt, dass die Schaltung gemäß Fig. 2d eine Variante zu der Fig. 2c darstellt und zum gleichen Ergebnis führt.

Durch das Schalten der beispielsweise als MOSFET ausgeführten Leistungshalbleiter können die Ausgangsspannungen U A = U DC, U A =-U DC und U A=0 eingestellt werden. Alle vier Ausführungen gemäß Fig. 2a bis 2d besitzen einen potenzialfreien, schaltbaren Freilauf, der jeweils aus T3 und D3 besteht. Sind die Halbleiterschalter T1 und T2 (bei Fig. 2c und 2d auch noch T3) geschlossen, so entspricht die Ausgangsspannung U A der Eingangsspannung U DC. Ist nur der Schalter T3 geschlossen, ergibt sich ein potenzialfreier Freilauf, da der Strom dann durch den Schalter T3 und die Diode D3 fließt, während die Spannung an den stromlosen Schaltern T1, T2, und den stromlosen Dioden D1 und D2 nicht definiert ist. Sind alle Halbleiterschalter geöffnet, kann ein Strom in der definierten Richtung nur durch die Dioden D1 und D2 fließen, wodurch sich eine Ausgangsspannung U A =U DC einstellt. Jede Vollbrückenschaltung A, B kann nur Strom aus dem Anschluss AC1 heraus und in den Anschluss AC2 hinein aktiv treiben, und auch der potenzialfreie Freilauf lässt nur diese Stromrichtung zu. Damit ist es nicht möglich, dass ein Strom durch interne, parasitäre Dioden der Halbleiterschalter T1, T2 fließt, so dass deren nachteilige Eigenschaften gänzlich eliminiert werden.

Jede der beiden Vollbrückenschaltungen A, B treibt wechselspannungsseitig einen Strom von wenigsten mehreren mA nur in eine solche Richtung, dass dieser aus den ersten Wechselspannungsanschlüssen AC, AC1' hinaus fließt und durch die zweite Wechselspannungsanschlüsse AC2, AC2' wieder hinein fließt

Die Vollbrückenschaltung B ist äquivalent zur Vollbrückenschaltung A aufgebaut. Lediglich ihre Wechselspannungsanschlüsse, zwischen denen die Spannung U B gemessen wird, sind mit AC1' statt AC1 und AC2' statt AC2 bezeichnet. Es können unterschiedlich aufgebaute Vollbrückenschaltungen A, B kombiniert werden, z. B. eine Vollbrücke A gemäß Fig. 2a mit einer Vollbrückenschaltung B nach Fig. 2d.

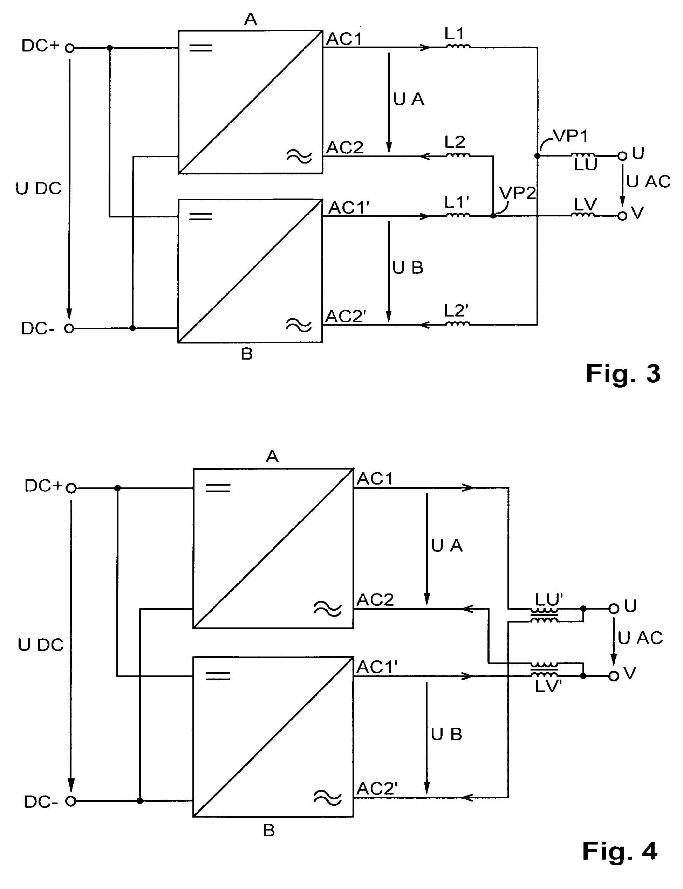

Fig. 3 zeigt eine Schaltung, bei der die erste Vollbrückenschaltung A eine schaltbare Verbindung zwischen ihren Anschlüssen AC1, AC2 aufweist, in der ein Strom vom zweiten Anschluss AC2 zum ersten Anschluss AC1 fließt sowie einen Stromfluss vom ersten Anschluss AC1 zum zweiten Anschluss AC2 blockiert, und die das Potenzial der Gleichspannungsseite entkoppelt. Die zweite Vollbrückenschaltung B weist ebenfalls eine schaltbare Verbindung zwischen ihren Anschlüssen AC1' und AC2' auf, in der ein Strom vom zweiten Anschluss AC2' zum ersten Anschluss AC1' fließt sowie einen Stromfluss vom ersten Anschluss AC1' zum zweiten Anschluss AC2' blockiert, und die das Potenzial der Gleichspannungsseite entkoppelt.

Hierbei ist der erste Wechselspannungsanschluss AC1 der ersten Brückenschaltung A über eine erste Induktivität L1 mit einem ersten Verbindungspunkt VP1 verbunden. Der andere Wechselspannungsanschluss AC2 der ersten Brückenschaltung A ist über eine zweite Brückeninduktivität L2 mit einem zweiten Verbindungspunkt VP2 verbunden. Der erste Wechselspannungsanschluss AC1' der zweiten Brückenschaltung B ist über eine andere, erste Brückeninduktivität L1' mit dem zweiten Verbindungspunkt VP2 verbunden. Der zweite Wechselspannungsanschluss AC2' der zweiten Brückenschaltung B ist über eine andere, zweite Brückeninduktivität L2' mit dem ersten Verbindungspunkt (VP1) verbunden. Beide Verknüpfungspunkte VP1, VP2 bilden netzseitige Anschlüsse.

Bei dieser Schaltung sind zwischen den Verbindungspunkten VP1 bzw. VP2 und den Wechselspannungsausgängen U bzw. V Filterdrosseln LU, LV eingefügt. Diese werden vorteilhaft so ausgeführt, dass ihr Induktivitätswert mindestens fünfmal, bevorzugt mindestens zehn- bis dreißigmal so groß ist wie der Induktivitätswert der Brückendrosseln L1, L2, L1', L2'. Im Allgemeinen genügt der kleine Induktivitätswert der Brückendrosseln L1, L2, L1', L2' bereits, um die Trennung der Stromrichtung aufrecht zu erhalten, während die Filterdrosseln LU, LV die eigentliche Filterfunktion übernehmen, so dass nur diese nennenswerte magnetische Energie speichern müssen. Damit werden nur zwei große magnetische Bauteile benötigt, während die Brückendrosseln LU, LV klein und leicht ausgeführt werden können.

Fig. 4 zeigt eine Schaltung, bei der statt der beiden Filterdrosseln LU, LV jeweils Doppeldrosseln LU', LV' verwendet werden, wobei die Hauptinduktivitäten der Doppeldrosseln LU' bzw. LV' den Filterinduktivitäten LU, LV entsprechen und die Streuinduktivitäten der Doppeldrossein den Brückeninduktivitäten L1, L2, L1', L2'. So lässt sich eine Trennung der Stromrichtungen mit nur zwei Bauelementen erreichen. Jede Brückeninduktivität L1, L2, L1', L2' ist als Streuinduktivität einer Filterdrossel LU, LV ausgeführt. Die Filterdrosseln LU, LV umfassen zwei Wicklungen auf einem gemeinsamen Kern, wobei jeweils ein Wicklungsende direkt oder über weitere Filterelemente an einem der Wechselspannungsausgänge U, V des Wechselrichters angeschlossen ist, während das andere Wicklungsende mit einem der Wechselspannungsanschlüsse AC1, AC1', AC2, AC2' der beiden Brückenschaltungen A, B verbunden ist.

### Bezugszeichenliste

- A, B: Vollbrücken für jeweils eine wechselspannungsseitige Stromrichtung
- AC1, AC2, AC1', AC2': Wechselspannungsanschlüsse der Vollbrücken A, B
- D1-D3: Dioden
- DC+, DC: Gleichspannungsanschlüsse
- L1, L2, L1', L2': Brückendrosseln
- LU, LV: Filterdrossein
- T1-T3: Halbleiterschalter
- U, V: Wechselspannungsanschlüsse des Wechselrichters
- U A, U B: Ausgangsspannungen der Vollbrücken A, B
- U AC: Spannung auf der Wechselspannungsseite des Wechselrichters
- U DC: Spannung auf der Gleichspannungsseite des Wechselrichters
- VP1, VP2: Verbindungspunkte

## Patentansprüche

1. Bidirektionaler Wechselrichter mit zwei Gleichspannungsanschlüssen (DC+, DC-) und zwei Wechselspannungsausgängen (U, V), umfassend zwei Vollbrückenschaltungen (A, B) und mehrere Induktivitäten (L1, L2, L1', L2'), wobei die erste Brückenschaltung (A) mit den beiden Gleichspannungsanschlüssen (DC+, DC-) und zwei Wechselspannungsanschlüssen (AC1, AC2) verbunden ist und die zweite Brückenschaltung (B) mit den beiden Gleichspannungsanschlüssen (DC+, DC-) und zwei anderen Wechselspannungsanschlüssen (AC1', AC2') verbunden ist, sowie die Wechselspannungsanschlüsse (AC1, AC2, AC1', AC2') beider Brückenschaltungen (A, B) über mehrere Brückeninduktivitäten (L1, L2, L1', L2', LU', LV') so miteinander verbunden sind, dass sie nur einen Stromfluss in eine Stromrichtung zulassen und wenigstens einen entkoppelbaren Freilaufpfad schaffen, wobei jede der Vollbrückenschaltungen (A, B) wechselspannungsseitig einen Strom, der über den Leckstrom der Halbleiter hinausgeht, nur in eine solche Richtung treibt, dass dieser aus den ersten Wechselspannungsanschlüssen (AC, AC1') hinaus fließt und durch die zweiten Wechselspannungsanschlüsse (AC2, AC2') wieder hinein fließt.

2. Wechselrichter nach Anspruch 1,
**dadurch gekennzeichnet**
**dass** jede der beiden Vollbrückenschaltungen (A, B) wechselspannungsseitig einen Strom von wenigsten mehreren mA nur in eine solche Richtung treibt, dass dieser aus den ersten Wechselspannungsanschlüssen (AC, AC1') hinaus fließt und durch die zweite Wechselspannungsanschlüsse (AC2, AC2') wieder hinein fließt.

3. Wechselrichter nach Anspruch 1 oder 2,
**dadurch gekennzeichnet,**
**dass** die erste Vollbrückenschaltung (A) eine schaltbare Verbindung zwischen ihren Anschlüssen (AC1, AC2) aufweist, in der ein Strom vom zweiten Anschluss (AC2) zum ersten Anschluss (AC1) fließt sowie einen Stromfluss vom ersten Anschluss (AC1) zum zweiten Anschluss (AC2) blockiert und die das Potenzial der Gleichspannungsseite entkoppelt,
und **dass** die zweite Vollbrückenschaltung (B) ebenfalls eine schaltbare Verbindung zwischen ihren Anschlüssen (AC1' und AC2') aufweist, in der ein Strom vom zweiten Anschluss (AC2') zum ersten Anschluss AC1' fließt sowie einen Stromfluss vom ersten Anschluss (AC1') zum zweiten Anschluss (AC2') blockiert und die das Potenzial der Gleichspannungsseite entkoppelt.

4. Wechselrichter nach einem der vorhergehenden Ansprüche,
**dadurch gekennzeichnet,**
**dass** der erste Verbindungspunkt (VP1) mit einem ersten Wechselspannungsausgang (U) des Wechselrichters direkt oder über Filterelemente verbunden ist,
und **dass** der zweite Verbindungspunkt (VP2) mit einem zweiten Wechselspannungsausgang (V) des Wechselrichters direkt oder über Filterelemente verbunden ist.

5. Wechselrichter nach einem der vorhergehenden Ansprüche,
**dadurch gekennzeichnet,**
**dass** wenigstens vier Brückeninduktivitäten (L1, L2, L1', L2') zur Verbindung der Vollbrückenschaltungen (A, B) untereinander vorhanden sind.

6. Wechselrichter nach Anspruch 5,
**dadurch gekennzeichnet,**
**dass** der erste Wechselspannungsanschluss (AC1) der ersten Brückenschaltung (A) über eine erste Induktivität (L1) mit einem ersten Verbindungspunkt (VP1) verbunden ist,
**dass** der andere Wechselspannungsanschluss (AC2) der ersten Brückenschaltung (A) über eine zweite Brückeninduktivität (L2) mit einem zweiten Verbindungspunkt (VP2) verbunden ist,
**dass** der erste Wechselspannungsanschluss (AC1') der zweiten Brückenschaltung (B) über eine andere, erste Brückeninduktivität (L1') mit dem zweiten Verbindungspunkt (VP2) verbunden ist,
**dass** der zweite Wechselspannungsanschluss (AC2') der zweiten Brückenschaltung (B) über eine andere, zweite Brückeninduktivität (L2') mit dem ersten Verbindungspunkt (VP1) verbunden ist,
**dass** beide Verknüpfungspunkte (VP1, VP2) netzseitige Ausgänge (U, V) bilden.

7. Wechselrichter nach Anspruch 5 oder 6,
**dadurch gekennzeichnet,**
**dass** zwischen dem ersten Verbindungspunkt (VP1) und einem Wechselspannungsausgang (U) sowie zwischen dem zweiten Verbindungspunkt (VP2) und einem weiteren Wechselspannungsausgang (V) jeweils mindestens eine Filterinduktivität (LU, LV) angeschlossen ist, die jeweils einen mindestens fünfmal größeren Induktivitätswert als jede einzelne Brückeninduktivität (L1, L2, L1', L2') aufweist.

8. Wechselrichter nach Anspruch 5 oder 7,
**dadurch gekennzeichnet,**
**dass** vier Drossel-Bauelemente vorhanden sind, die jeweils eine Brückeninduktivität (L1, L2, L1', L2') zwischen den Brückenschaltungen (A, B) und den Verknüpfungspunkten (VP1, VP2) bilden.

9. Wechselrichter nach einem der vorhergehenden Ansprüche 1 bis 7,
**dadurch gekennzeichnet,**
**dass** jede Brückeninduktivität (L1, L2, L1', L2') als Streuinduktivität einer Filterdrossel (LU, LV) ausgeführt ist, wobei die Filterdrossel (LU, LV) zwei Wicklungen auf einem gemeinsamen Kern besitzt, wobei jeweils ein Wicklungsende direkt oder über weitere Filterelemente an einem der Wechselspannungsausgänge (U, V) des Wechselrichters angeschlossen ist, während das andere Wicklungsende mit einem der Wechselspannungsanschlüsse (AC1, AC1', AC2, AC2') der beiden Brückenschaltungen (A, B) verbunden ist.

10. Wechselrichter nach einem der vorhergehenden Ansprüche,
**dadurch gekennzeichnet,**
**dass** Filterinduktivitäten (LU, LV) vorhanden sind, die mindestens den fünffachen, insbesondere mindestens den zehn- bis dreißigfachen Induktivitätswert jeder einzelnen Brückeninduktivität (L1, L2, L1', L2') aufweisen.

11. Wechselrichter nach einem der vorhergehenden Ansprüche,
**dadurch gekennzeichnet,**
**dass** das Verhältnis von Filterinduktivitäten (LU, LV) zu den Brückeninduktivitäten (L1, L2, L1', L2') derart gewählt ist, dass kein Strom durch Bodydioden von Schaltelementen (T1 - T3) der Brückenschaltungen fließt.

12. Wechselrichter nach einem der vorhergehenden Ansprüche,
**gekennzeichnet durch**
eine Ausführung als Photovoltaikwechselrichter.

## Geänderte Patentansprüche

### Geänderte Patentansprüche gemäss Regel 137(2) EPÜ.

**1.** Bidirektionaler Wechselrichter mit zwei Gleichspannungsanschlüssen (DC+, DC-) und einem ersten Wechselspannungsausgang (U) und einem zweiten Wechselspannungsausgang (V), umfassend eine erste Vollbrückenschaltung (A), eine zweite Vollbrückenschaltung (B) und mehrere Brückeninduktivitäten (L1, L2, L1', L2'), wobei die erste Brückenschaltung (A) mit den beiden Gleichspannungsanschlüssen (DC+, DC-) und einem ersten Wechselspannungsanschluss (AC1) und einem zweiten Wechselspannungsanschluss (AC2) der ersten Vollbrückenschaltung (A) verbunden ist und die zweite Brückenschaltung (B) mit den beiden Gleichspannungsanschlüssen (DC+, DC-) und einem weiteren ersten Wechselspannungsanschluss (AC1') und einem weiteren zweiten Wechselspannungsanschluss (AC2') der zweiten Vollbrückenschaltung (B) verbunden ist, sowie die Wechselspannungsanschlüsse (AC1, AC2, AC1', AC2') beider Brückenschaltungen (A, B) über mehrere Brückeninduktivitäten (L1, L2, L1', L2', LU', LV') so miteinander verbunden sind, dass sie nur einen Stromfluss in eine Stromrichtung zulassen und wenigstens einen von der Gleichspannungsquelle entkoppelbaren, potentialfreien und schaltbaren Freilaufpfad schaffen, wobei jede der Vollbrückenschaltungen (A, B) wechselspannungsseitig einen Strom, der über den Leckstrom der Halbleiter hinausgeht, nur in eine solche Richtung treibt, dass dieser aus den ersten Wechselspannungsanschlüssen (AC1, AC1') hinaus fließt und durch die zweiten Wechselspannungsanschlüsse (AC2, AC2') wieder hinein fließt.

**2.** Wechselrichter nach Anspruch 1,
**dadurch gekennzeichnet**
**dass** jede der beiden Vollbrückenschaltungen (A, B) wechselspannungsseitig einen Strom von wenigsten mehreren mA nur in eine solche Richtung treibt, dass dieser aus den ersten Wechselspannungsanschlüssen (AC1, AC1') hinaus fließt und durch die zweite Wechselspannungsanschlüsse (AC2, AC2') wieder hinein fließt.

**3.** Wechselrichter nach Anspruch 1 oder 2,
**dadurch gekennzeichnet,**
**dass** durch die schaltbare Verbindung zwischen den Wechselspannungsanschlüssen (AC1, AC2) der ersten Vollbrückenschaltung (A) ein Strom vom zweiten Wechselspannungsanschluss (AC2) zum ersten Wechselspannungsanschluss (AC1) fließt sowie einen Stromfluss vom ersten Wechselspannungsanschluss (AC1) zum zweiten Wechselspannungsanschluss (AC2) blockiert wird,
und durch die schaltbare Verbindung zwischen den Wechselspannungsanschlüssen (AC1', AC2') der zweiten Vollbrückenschaltung (B) ein Strom vom weiteren zweiten Wechselspannungsanschluss (AC2') zum weiteren ersten Wechselspannungsanschluss (AC1') fließt sowie einen Stromfluss vom weiteren ersten Wechselspannungsanschluss (AC1') zum weiteren zweiten Wechselspannungsanschluss (AC2') blockiert.

**4.** Wechselrichter nach einem der vorhergehenden Ansprüche,
**dadurch gekennzeichnet,**
**dass** ein erster Verbindungspunkt (VP1) des ersten Wechselspannungsanschlusses (AC1) und des weiteren zweiten Wechselspannungsanschlusses (AC2') mit dem Wechselspannungsausgang (U) des Wechselrichters direkt oder über Filterelemente verbunden ist,
und **dass** ein zweiter Verbindungspunkt (VP2) des weiteren ersten Wechselspannungsanschlusses (AC1') und des zweiten Wechselspannungsanschlusses (AC2) mit dem zweiten Wechselspannungsausgang (V) des Wechselrichters direkt oder über Filterelemente verbunden ist.

**5.** Wechselrichter nach Anspruch 4,
**dadurch gekennzeichnet,**
**dass** wenigstens vier Brückeninduktivitäten (L1, L2, L1', L2') zur Verbindung der Vollbrückenschaltungen (A, B) untereinander vorhanden sind.

**6.** Wechselrichter nach Anspruch 5,
**dadurch gekennzeichnet,**
**dass** der erste Wechselspannungsanschluss (AC1) der ersten Brückenschaltung (A) über eine erste Brückeninduktivität (L1) mit einem ersten Verbindungspunkt (VP1) verbunden ist,
**dass** der zweite Wechselspannungsanschluss (AC2) der ersten Brückenschaltung (A) über eine zweite Brückeninduktivität (L2) mit einem zweiten Verbindungspunkt (VP2) verbunden ist,
**dass** der erste Wechselspannungsanschluss (AC1') der zweiten Brückenschaltung (B) über eine andere, erste Brückeninduktivität (L1') mit dem zweiten Verbindungspunkt (VP2) verbunden ist,
**dass** der zweite Wechselspannungsanschluss (AC2') der zweiten Brückenschaltung (B) über eine andere, zweite Brückeninduktivität (L2') mit dem ersten Verbindungspunkt (VP1) verbunden ist,
**dass** beide Verknüpfungspunkte (VP1, VP2) netzseitige Ausgänge (U, V) bilden.

**7.** Wechselrichter nach Anspruch 5 oder 6,
**dadurch gekennzeichnet,**
**dass** zwischen dem ersten Verbindungspunkt (VP1) und dem ersten Wechselspannungsausgang (U) sowie zwischen dem zweiten Verbindungspunkt (VP2) und dem zweiten Wechselspannungsausgang (V) jeweils mindestens eine Filterinduktivität (LU, LV) angeschlossen ist, die jeweils einen mindestens fünfmal größeren Induktivitätswert als jede einzelne Brückeninduktivität (L1, L2, L1', L2') aufweist.

**8.** Wechselrichter nach Anspruch 5 oder 7,
**dadurch gekennzeichnet,**
**dass** vier Drossel-Bauelemente vorhanden sind, die jeweils eine Brückeninduktivität (L1, L2, L1', L2') zwischen den Brückenschaltungen (A, B) und den Verknüpfungspunkten (VP1, VP2) bilden.

**9.** Wechselrichter nach einem der vorhergehenden Ansprüche 1 bis 7,
**dadurch gekennzeichnet,**
**dass** jede Brückeninduktivität (L1, L2, L1', L2') als Streuinduktivität einer Filterdrossel (LU, LV) ausgeführt ist, wobei die Filterdrossel (LU, LV) zwei Wicklungen auf einem gemeinsamen Kern besitzt, wobei jeweils ein Wicklungsende beider Wicklungen direkt oder über weitere Filterelemente an einem der Wechselspannungsausgänge (U, V) des Wechselrichters angeschlossen ist, während das jeweils andere Wicklungsende mit einem der Wechselspannungsanschlüsse (AC1, AC1', AC2, AC2') der beiden Brückenschaltungen (A, B) verbunden ist.

**10.** Wechselrichter nach einem der vorhergehenden Ansprüche,
**dadurch gekennzeichnet,**
**dass** Filterinduktivitäten (LU, LV) vorhanden sind, die mindestens den fünffachen, insbesondere mindestens den zehn- bis dreißigfachen Induktivitätswert jeder einzelnen Brückeninduktivität (L1, L2, L1', L2') aufweisen.

**11.** Wechselrichter nach einem der vorhergehenden Ansprüche,
**dadurch gekennzeichnet,**
**dass** das Verhältnis von Filterinduktivitäten (LU, LV) zu den Brückeninduktivitäten (L1, L2, L1', L2') derart gewählt ist, dass kein Strom durch Bodydioden von Schaltelementen (T1, T2, T3, T2', T3') der Brückenschaltungen fließt.

**12.** Wechselrichter nach einem der vorhergehenden Ansprüche,
**gekennzeichnet durch**
eine Ausführung als Photovoltaikwechselrichter.
